Europäisches Patentamt

European Patent Office

Office européen des brevets

(11) Publication number: **0 229 102 B1**

(12) **EUROPEAN PATENT SPECIFICATION**

(45) Date of publication of patent specification: **19.01.94**   (51) Int. Cl.⁵: **H02G 15/04**, H02G 15/013, H02G 1/14

(21) Application number: **86903753.1**

(22) Date of filing: **02.05.86**

(86) International application number:
**PCT/US86/00966**

⑲ International publication number:
**WO 86/06561 (06.11.86 86/24)**

(54) **CABLE SEALING.**

(30) Priority: **02.05.85 US 730409**

(43) Date of publication of application:
**22.07.87 Bulletin 87/30**

(45) Publication of the grant of the patent:
**19.01.94 Bulletin 94/03**

(84) Designated Contracting States:
**AT BE CH DE FR GB IT LI LU NL SE**

(56) References cited:
**EP-A- 120 437          EP-A- 0 108 518
EP-A- 0 174 165      DE-A-31 275 67
US-A- 2 524 977      US-A- 3 084 115
US-A- 3 848 074      US-A- 3 879 575
US-A- 3 992 569      US-A- 4 025 717
US-A- 4 187 360      US-A- 4 231 986
US-A- 4 288 471      US-A- 4 343 844
US-A- 4 369 284      US-A- 4 414 142
US-A- 4 485 218      US-A- 4 504 699
US-A- 4 509 821**

(73) Proprietor: **RAYCHEM CORPORATION (a Delaware corporation)**
**300 Constitution Drive**
**Menlo Park, California 94025(US)**

(72) Inventor: **TOY, Lester, Tungnan**
**33235 Pheasant Street**
**Fremont, CA 94536(US)**
Inventor: **CHANG, Rong, Jong**
**32814 Shaver Lake**
**Fremont, CA 94536(US)**
Inventor: **MIDGLEY, John, Arthur**
**2608 Graceland Avenue**
**San Carlos, CA 94070(US)**

(74) Representative: **Auckland, Jacqueline et al**
**Raychem Limited**
**Intellectual Property Law Department**
**Faraday Road**
**Dorcan**
**Swindon, Wiltshire SN3 5HH (GB)**

**Description**

The invention relates to a cable sealing kit, an article comprising a cable and the kit, and a method for sealing the area between two or more cable cores using the kit.

At various places in an electrical distribution system, an electrical cable is divided into two or more components, for example where a branch-off cable is connected to a main cable or where a cable containing three or more cores is separated into the individual cores. Where one or more cables or cores are divided from the main cable, the cable insulation generally has been removed to permit the jointing of a branch-off cable or breakout of the cable cores. The area where the insulation has been removed must then be reinsulated. In the case of shielded or armored power cables, the shielding and armoring is also removed and must be re-established. This is generally accomplished by installing an enclosure around that region of the cables. The term "breakout" is used in this application to refer to either two or more cables or two or more cores where they separate from a main cable or cables.

Enclosures suitable for this use can be, for example, resin filled joint cases, polymeric sleeves or the like. The location where the individual cables exit from an enclosure, the area between the cables and between the cables or cores and enclosure must be sealed to prevent ingress of moisture. A number of methods have been used to seal breakouts with varying success. A heat shrinkable polymeric boot may be Positioned on the breakout using mastic or adhesive to hold the boot in place. Heat shrinkable boots however are costly to manufacture because of their shape and usually require access to the cable conductor ends to slip the boot into the proper position over the breakout area. Adhesives and mastics have been put in the area between the breakout cable core and the main cable (crotch area) to seal but these are difficult to pack into the crotch area without leaving voids resulting in a poor seal and may require heat to cause them to flow and fill the crotch area. The application of heat can damage the conductor covering or the conductor. Tapes of dimensionally stable polymeric material with an adhesive or mastic have been used to wrap the cable breakout area but tend to leak if not properly overlapped.

Shaped articles have been used as sealing elements in a variety of methods. In US 4,438,294 a sealing element of a thermoplastic or plastic material for a cable entrance socket is disclosed. The sealing element seals the area between the sheaths of cables using straight sided or concave articles which surround only a portion of the cable and conductors in the crotch area. No gels are disclosed and the thermoplastic or plastic materials described are substantially non-tacky and rigid.

In Great Britain Patent No. 2,057,202, a polymeric article is described comprising a cylindrical member with a plurality of channels for enclosing a plurality of cables. The articles may seal by being made heat recoverable or may be sealed with an adhesive or mastic. They are described as non-tacky useful to seal with, protect and insulate cables. In US Patent No. 4,298,415 a branch off seal is disclosed comprising a heat recoverable sleeve and one or more clips attached to the sleeve opening to form the sleeve into a desired number of cable conduits.

EP-A-0,108,518 discloses an apparatus and method for protecting a substrate in which an encapsulant of gel, which has been pre-formed in the absence of the substrate, is adhered to a support member. The support member and the substrate to be encapsulated are then pressed against each other, thus deforming the encapsulant into close and conforming contact with the substrate.

US-A-4,504,699 discloses an insulating gel disposed within a container and arranged to receive and be penetrated by one or more electrical conductors.

In accordance with one aspect of the present invention, there is provided a cable sealing kit for use with a cable having two or more cores, comprising

(a) a shaped article of a polymeric gel having two or more holes extending therethrough for receiving respective ones of the cable cores,

the polymeric gel having

(i) a cone penetration value of about 30 to about $400(10^{-1}\text{mm})$, and

(ii) an elongation of from about 25% to about 850%;

and

(b) an enclosure for surrounding the shaped article,

characterised in that a slit extends through the gel article from the edge of each hole to the edge of the gel article in a direction inclined towards an adjacent hole, thereby to receive the cable core without necessitating access to a free end of the cable.

In accordance with another aspect of the present invention, there is provided an article comprising a cable having two or more cores and a cable sealing kit according to said one aspect, wherein the shaped gel article is positioned such that it encloses the cable cores and seals the area between the cores and between the cores and the enclosure.

2

In accordance with a further aspect of the present invention, there is provided a method of sealing an area around the cores of a cable having two or more cores, the cable being disposed within an enclosure, wherein a cable sealing kit according to said one aspect is applied to the cable such that the shaped gel article encloses the cable cores and such that the enclosure surrounds the gel article.

Gels are widely known in the art, for example silicone-based gels, polyurethane-based gels or polystyrenebutadiene-styrene, polystyrene-isoprene-styrene, and polystyrene-ethylene butylene-styrene block copolymer based gels. Preferred gels for use in this invention are gelloid compositions comprising a crosslinked non-silicone polymer having an olefinic unsaturated content of less than 10 mole percent and having dispersed therein a liquid in an amount of from about 20% to about 95% by weight based on the weight of the liquid and polymer and from 0 to 0.3 volume fraction of a filler, said cross-linked polymer

a) if derived from a solid, relatively high molecular weight polymer, having a gel fraction of at least about 50%, or

b) if derived from a liquid, relatively low molecular weight polymer, having at least about 0.1 (preferably 0.1 to about 3) crosslinks per weight average molecule;

said composition having a storage modulus of $(1 + 2.5v + 14.1v^2)x$ dynes/cm$^2$ wherein x is less than $5 \times 10^5$ at 30°C and greater than $5 \times 10^2$ at 90°C, and v is the volume fraction of the filler, with the proviso that, if the crosslinked polymer is prepared from a solid high molecular weight polymer, the storage modulus at 140°C is at least about 70% of the storage modulus at 70°C, and a dynamic viscosity of $(1 + 2.5v + 14.1v^2)y$ poises wherein y is less than $1 \times 10^5$ at 30°C and greater than $5 \times 10^2$ at 90°C and v is the volume fraction of the filler, said composition exhibiting first degree blocking. These compositions are described more fully in EP-A-0 174 165.

When forming the gel into such a shaped article the holes are formed preferably slightly smaller than the size of the cable that is to be inserted therein. The gels used in the invention will stretch to accommodate the increased size cable and the tension created provides a better seal. The number of holes should correspond to the number of cables to pass therethrough. The holes may be stretched by placing tubes, mandrels or other articles in the holes to keep them in an expanded condition prior to placing the shaped article around the cables. The tubes may then be removed when the shaped article is in place. There is preferably a slit extending from the edge of each hole to the outer edge of the article so that the shaped article may be placed around the cables without access to the free end of the cable. A hole may also be larger or the same size as the cable.

When the shaped article is to be used to seal a cable end, the hole should not pass all the way through the shaped article. The shaped article will provide the environmental seal necessary and be held in place by an enclosure used.

The polymeric gel is selected such that it has a cone penetration value as measured by ASTM D-937-77, of from about 30 to about 400 ($10^{-1}$ mm) and preferably from about 50 to about 350 ($10^{-1}$ mm). Further, said gel is selected such that it has an elongation, as measured by ASTM D-412, of from about 25% to about 850% and more preferably from about 100% to 750%. The gels may further be selected for their insulative, stress grading, or conductive as well as their sealing properties. Generally, it is preferable that the gel should have a dielectric constant (permittivity) of less than 6 at 50 Hz for insulating gels and greater than 6 for stress grading gels (as measured by ASTM D-150). Where the gel is used as insulation as well as sealing, the gels preferably have a volume resistivity of at least $10^{10}$ ohm-cm (as measured by ASTM D-257). For stress grading applications, the gels preferably have a specific impedance of $10^7$-$10^{10}$ ohm-cm at 50 Hz (ASTM D-150), and for conductive applications, the gels preferably have a volume resistivity of less than $10^7$ ohm-cm. The gels possess sufficient tack to seal and adhere to the breakout or cable end. Further the properties of the gel allow cable movement without breaking the seal formed, due to the gels ability to deform and return substantially to its original shape while maintaining the tack necessary to seal.

As mentioned above, the preferred gels for use in this invention are gelloid compositions comprising a crosslinked, non-silicone polymer having dispersed therein from about 20% to about 95% by weight of a liquid and having certain specified properties.

These compositions are preferably prepared by subjecting a non-silicone liquid polymer containing from about 20% to about 95% by weight of a liquid to a crosslinking means such as a chemical means or irradiation means. The polymer starting material is a crosslinkable liquid polymeric material, preferably a non-silicone liquid rubber, with low or no unsaturation prior to crosslinking. The liquid polymeric material preferably has a molecular weight of less than about 90,000, preferably less than about 50,000, and a Mooney viscosity of ML 1 + 4 at 100°C of less than 10. Mooney viscosity is measured by ASTM D-1646. Said polymers are primarily liquids at these molecular weights and viscosities. The liquid polymer preferably has a molecular weight less than about 7.5 times the polymer's critical molecular weight (see e.g.

Mechanical prop of Polymers, Nielsen 1962 for a discussion of critical molecular weight). The polymers can be a hydrocarbon backbone polymer or a polymer containing carbon as well as other atoms, e.g. oxygen, nitrogen, etc. in the backbone with the exception of silicone. The polymers are limited to those which have low or no unsaturation prior to crosslinking. In general, the amount of unsaturation will be less than about 10% mole, preferably less than about 7 mole percent and preferably less than 4 mole percent. If the unsaturation is too high the resulting product tends to be thermally unstable.

Preferred liquid polymeric materials include liquid butyl rubber, epichlorohydrin rubber, ethylene-propylenediene monomer rubber (EPDM), hydrogenated polyisoprene, hydrogenated polybutadiene, hydrogenated styrene-butadiene rubber (SBR), hydrogenated polychloroprene, functionalized polyisobutylene (i.e. polyisobutylene with reactive groups added that are capable of crosslinking such as hydroxy, amine or carboxy groups), chlorinated polyethylene, liquid fluorinated polymers (e.g. Viton from DuPont), hydrogenated nitrile rubber and other hydrogenated liquid polymers. Further, one can combine the various polymers to form compositions of desired properties.

The liquid dispersed in the crosslinked polymer in accordance with this invention can be any liquid which is capable of being dispersed in the polymer in an amount from about 20% to about 95%, and which does not react during crosslinking of the polymer. The liquid may be a plasticizer, compatibilizer, tackifier, or the like. Suitable liquids include, for example, paraffinic oils, naphthenate oils, aromatic oils, liquid polybutenes, alkyl (or aryl) phthalates, vegetable oils, mineral oils, trimellitates, esters of polyethylene glycols, alkyl (or aryl) phosphates, methyl ester of hydrogenated wood rosin, liquid rosin oils, pine tar, polyterpenes, non-reacting liquid rubbers, the starting liquid polymer which remains uncrosslinked or at least crosslinked less than .1 crosslink per weight average molecule, and the like.

Crosslinking may be by any conventional crosslinking means, preferably UV means, irradiation means or by chemical means. Radiation crosslinking can be accomplished by electron beam, or the like treatment. Suitable crosslinking promoters can be incorporated to encourage radiation crosslinking such as triallylcyanuate and triallylisocyanuate. Suitable chemical crosslinking agents can be chosen based on the individual polymer or polymers used. For example, a phenolic resin or p-quinone dioxime can be used to cure butyl rubber, peroxide can be used to cure EPDM or diisocyanate dimer acid can be used to cure epichlorohydrin rubber.

Optionally, plasticizers may be added to help obtain a gelloid with the desired cone penetration values. Such plasticizers preferably would include all liquids which are capable of reducing the viscosity of the base rubber, have low or no unsaturation as described above and are compatible with the base rubber.

A filler may be added to the composition, if desired. Generally, the amount of filler added is from 0 to 0.3 volume fraction. Preferably, the filler is in an amount from .1 to 0.2 volume fraction. The term "filler" is used herein to include all solid additives including particulate matter or fibrous matter present in the composition. These fillers include pigments, fillers known for conductive, (both electrical and thermal) stress grading and insulative purposes e.g. carbon black, barium titnate, zinc oxide, iron oxide, silicone carbide, metals and the like, reinforcing agents, thermal stabilizers, fungicides, biocides, flame retardants, for example, aluminum trihydrate, and the halogenated flame retardants, leak indicators (i.e. chemicals which react upon exposure to certain chemicals), corrosion inhibitors, ultraviolet light stabilisers, processing aids, impact modifiers and the like.

The compositions are formed preferably by mixing a liquid non-silicone polymer with any desired fillers in an amount of from 0 to 0.3 volume fraction, any crosslinking agents or the like and the liquid and subjecting the mixture to a crosslinking means. The composition will generally take the shape of the container during crosslinking but can be reshaped e.g. by cutting as desired.

The term cable is used in this application to refer to one or more electrical conductors surrounded by electrical insulation. In the case of a breakout, two or more cores, i.e. conductor and insulation, are divided from a main cable which contains those cores surrounded by a common insulation layer, optionally with shielding and/or armoring. The sealing method of this invention, is applied to sealing between the individual cores and the individual cores and enclosure. The term cable in the general description and claims is to be understood to cover the individual cores of a breakout or the main cable or the like. In the case of a branch-off one or more cables are jointed to a main cable. The sealing method of this invention is applied to sealing between the two or more branch-off cables and and the main cable mentioned above. The term breakout is used herein to apply to such branch-offs as well as breakouts.

The enclosure may be any material suitable for enclosing a cable breakout or cable end. One skilled in the art would be able to select an appropriate enclosure. For example, dimensionally stable, preferably polymeric, tapes, shells and the like can be applied. Polymeric materials include polyethylene, polypropylene, polyvinyl-chloride, polyvinylidene fluoride, polyamides, polyesters, fluorinated polymers, ethylene-propylene rubbers, EPDM and polystyrene-butadiene-styrene (SBS), polystyreneisoprene-styrene (SIS) and polystyrene-ethylenebutylene-styrene (SEBS) block copolymers. Dimensionally recoverable polymeric articles are especially preferred for enclosures.

The dimensionally recoverable polymeric article is preferably of the heat recoverable type, preferably a polyolefen such as polyethylene. Other polymers such as polyvinyl chloride and polymeric blends can also be used. Particularly preferred is cross-linked polyethylene.

The term "recoverable article" is used herein to mean an article the dimensional configuration of which may be made substantially to change when subjected to some treatment. Heat-recoverable articles, which recover when heated, are particularly preferred in the practice of this invention. Usually these articles recover, towards an original shape from which they have previously been deformed but the term "recoverable", as used herein, also includes an article which adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962, 3,086,242 and 3,597,372. As is made clear in, for example, U.S. Patent 2,027,962, the original dimensionally heat-stable form may be a transient form in a continuous process in which, for example, an extruded tube is expanded, while hot, to a dimensionally heat-unstable form but, in other applications, a preformed dimensionally heat-stable article is deformed to a dimensionally heat-unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article while in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an inner tubular member is held in a stretched state by a second member, such as an outer tubular member, which, upon heating weakens and thus allows the elastomeric member to recover.

Articles which are dimensionally recoverable without the application of heat are described in U.S. Patents Nos. 4,070,746, 4,179,320 and 4,338,970. Such articles comprise an elastomeric member held in a stretched state by a retaining member. The elastomeric member is retained in the stretched state until released from the retaining member by application of solvent or by mechanically breaking or removing the retaining member. Typically, such articles comprise an elastomeric tube held in a stretched state by an outer tubular member to which it is adhered. Polymeric sleeve which recover without application of heat can be used in the practice of this invention.

Optionally, the enclosure may have an inner layer of adhesive to aid in bonding the enclosure to the shaped article and any overlap of the enclosure onto the cable or cable insulation. The adhesive inner layer can be any sealant typically used to bond an enclosure to a cable. Such sealants typically comprise mastics or hot melt adhesives.

Particularly preferred for an adhesive inner layer are hot melt adhesives containing ethylene copolymers, for example copolymers of ethylene with vinyl acetate, malaic anbydric acrylic acid, methacrylic acid or an alkyl acrylate such as ethyl acrylate. Mastics can also be used, for example, low molecular weight polyisobutylene based mastic compositions.

The enclosure, the shaped article and/or the adhesive inner layer can contain various additives as desired. Additives include, for example, stabilizers, reinforcing or non-reinforcing fillers, pigments, carbon black, plasticizers, surfactents, processing aids, corrosion inhibitors conductive fillers, fungicides, biocides, leak indicators and the like where appropriate.

A seal for a cable breakout area or other group of two or more cables is formed by positioning the shaped article of the polymeric gel around the cables. This may be done by positioning the free ends of the cables through the holes in the shaped article. Another method involves providing a slit in the shaped article between the hole and an edge of the shaped article such that the article can be opened to position the cables inside the holes and then reclosed. The tack of the material is such that on reclosure a seal is formed. The shaped article may optionally be formed by joining two or more pieces together to form the desired shape. An adhesive can be used to join the pieces but the tack of the material and the compressive force of the enclosure may be sufficient to provide an adequate seal. Where one or more cable ends are to be sealed, a shaped article is placed on the cable end such that the shaped article is positioned on the surface of the cable end or each cable end is positioned in a hole in the shaped article, the hole being only a portion of the way through the shaped article. An enclosure is then placed such that it surrounds the shaped article and overlaps a portion of the cable. The gel is so positioned that when surrounded with the enclosure it forms a seal preventing the ingress of water and the like. Likewise the gel is chosen such that the gel itself forms a barrier against water and the like. As can be seen from the drawings, the enclosure surrounds only a portion of the shaped article, the shaped article being open to the environment. In another embodiment, a cover, e.g. a polymeric or metallic article is placed over the exposed portion of the shaped article to act as a cover to protect the shaped article against dirt, or the like. Where there is substantial pressure from inside the cable the cover can be used to prevent the shaped article from being forced out of the opening in the enclosure. It is contemplated that the enclosure can completely cover the shaped article and that the cover is therefore an integral part of the enclosure.

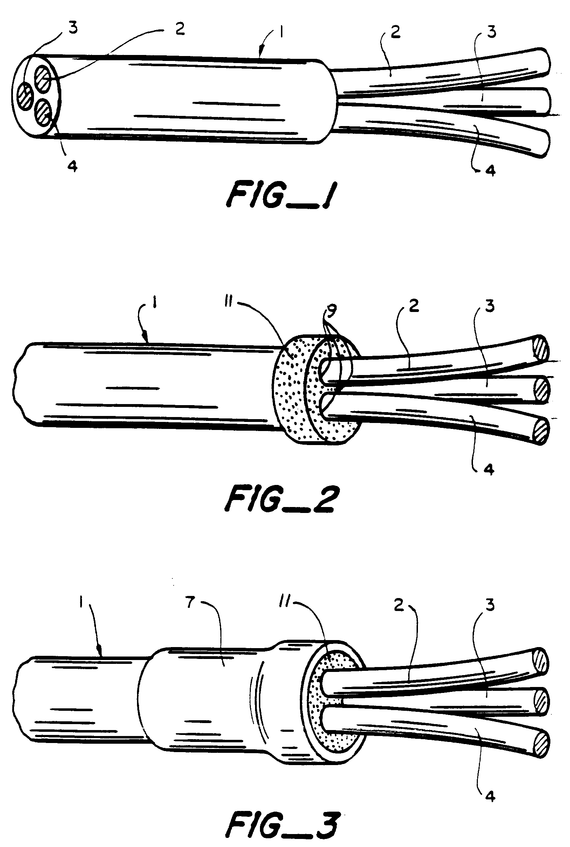

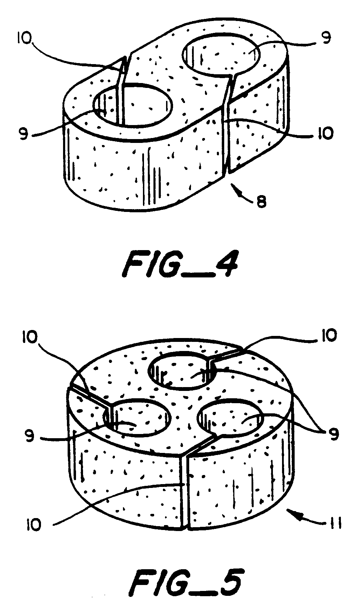

In the drawings, Figure 1 shows a cable 1 with 3 cores 2, 3 and 4 which have been separated from the cable by removal of the protective sheath. Figure 2 shows the same cable 1 with a shaped article 11 of a polymeric gel wherein cables 2, 3 and 4 have been positioned through respective holes 6. The gel article 11 is shown in more detail in Figure 5. Figure 3 shows the cable of Figure 2 wherein an enclosure 7 surrounds the shaped article of polymeric gel 11 and a portion of the cable 1. A portion of the polymeric gel is exposed to the environment. Figures 4 and 5 show shaped articles 8 and 11 of a polymeric gel. The articles each have holes 9 for positioning cables therethrough and slits 10 for positioning the shaped article around cables without access to their free end.

The following examples are illustrative only and are not to be construed as limiting the invention. One skilled in the art would readily be able to select appropriate crosslinking agents, crosslink promotors, gels, radiation levels, cable breakouts, sets of cables, cable ends, enclosures, adhesives, mastics, etc. for a particular application without undue experimentation.

DESCRIPTION OF THE PREFERRED EMBODIMENTS

Example 1 - Chemically crosslinked butyl rubber (dielectric gel)

The following formulation was mixed then was cured for 30 minutes at 100°C to form a gel.

| | |
|---|---|
| Liquid butyl rubber | 100g |
| Zinc Stearate-filler | 5g |
| Zirex (Zinc Resinate)-chemical crosslinking activator and filler | 10g |
| Paraffinic oil - plasticizer | 90g |
| p-Quinone Dioxime (62.5% in oil)-crosslinking agent | 3.2g |
| Lead dioxide (50% in dibutylphthalate)-cure actuator | 15g |
| Carbon black - colorant & U.V. light stabilizer | 2g |

The resulting gel had a volume resistivity of $10^{14}$ ohm-cm (ASTM D-150), a permitivity @ 50 Hz of 3.0 (ASTM D-257) a cone penetration of 112 and elongation of 350%.

Example 2 - Chemically crosslinked epichlorohydrin (stress grading gel-oil resistant)

The following formulation was mixed and then cured for 60 minutes at 100°C to form a gel.

| | |
|---|---|
| Hydrin l0Xl (liquid epichlorohydrin rubber) | 100g |
| Dimer acid diisocyanate-crosslinking agent | 46g |
| dioctyl phthalate-plasticizer | 100g |
| T-12 - tin catalyst | 10g |
| Dabco 33LV (Tertiary amines - co-catalyst) | 2g |
| Antioxidant 2246 - substituted phenol type of antoixidant | 0.8g |

The resulting gel had a specific impedance at 50 Hz of $1.8 \times 10^9$; a permitivity @ 50 Hz of 7.4, a cone penetration value of 51.

6

Example 3 - Stress Grading Butyl gel

| | |
|---|---|
| Kalene 200 (liquid butyl rubber) | 100g |
| Kaydol oil (mineral oil) | 95g |
| p-quinone dioxime prespersion (62.5%) | 4.8g |
| Lead dioxide prespersion (50%) | 18g |
| N990 Carbon Black (Thermax MT) | 69.4g |
| S37 Carbon Black) (Vulcan P) | 14.7g |

Crosslinked at 100°C for 30 minutes resulted in a gel with cone penetration value of 81, a specific impedance of $9.5 \times 10^8$, a permitivity of 32.6.

Example 4 - Conductive Butyl Gel

| | |
|---|---|
| Kalene 200 (liquid Butyl rubber) | 100g |
| Kaydol oil (mineral oil) plasticizer | 95g |
| p-quimone dioxime prespersion (62.5%) curing agent | 4.8g |
| Lead dioxide prespersion (50%) curing activiator | 18g |
| Ketjen carbon black (conductive carbon black) | 20g |

The above formulation was crosslinked at 100°C for 30 minutes and resulted in a gel with cone penetration value of 42, volume resistivity $2.4 \times 10^5$ ohm-cm.

Example 5 - Gel Tape Formulation

| | |
|---|---|
| Kalene 800 (liquid butyl rubber) | 100 |
| Sunpar 2280 (plasticizer) (paraffinic oil) | 130 |
| Zinc Oxice Dispersion (80%) | 6.25 |
| Statex N660 (Carbon black) | 2 |
| Irgonox 1076 (Antioxidant) | 2 |
| SAG47 (silicone antifoaming agent) | 1 |
| HRJ2564 (Phenolic Resin) | 12 |
| | 253.25 |

| |
|---|
| Cured 50 minutes @150°C |
| Gel content (based on liquid butyl rubber) = 78%. |
| Storage modulus at 30°C = $1.7 \times 10^4$ dynes/cm$^2$ |
| Storage modulus at 90°C = $7.3 \times 10^3$ dynes/cm$^2$ |
| Dynamic viscosity at 30°C = $4.2 \times 10^4$ poises |
| Dynamic viscosity at 90°C = $2.0 \times 10^4$ poises |
| Exhibits first degree blocking. |

Example 6

The polymeric gels in examples 1 through 5 are formed into a shaped article with 3 holes in a circular fashion (see Fig. 5) by casting the liquid rubber and remaining ingredients into a mold and crosslinking in said mold with slits for application with and without access to the cable ends.

A three core conductor cable, each conductor being 4/0 gauge is stripped of its protective sheath to a distance of about 7 in. exposing each of the 3 cable core. The shaped article of polymeric gel is placed such that the cables pass through the holes and as close to the crotch as possible thereafter a polymeric

7

tube of heat recoverable cross-linked polyethylene is shrunk down over the shaped article exposing the area where the cables exit the gel (see Fig. 3). The sealed cable is then tested for leaks by immersion in water and then measuring the change if any in resistance. After 200 hours immersion in water no leaks are observed.

Example 7

The gels examples 1 through 5 are formed into a shaped article by casting in a mold and crosslinking therein. A single conductor cable end is placed in the hole in the shaped article or where appropraite the shaped article placed at the end of the cable. A tube of heat recoverable crosslinked polyethylene is shrunk down on the shaped article having the end of the shaped article exposed (see Fig. 7). The cable end seal is tested for leaks by immersion in water and then measuring the change, if any, in resistance between a wire immersed in the water and the sealed cable. After 200 hours immersion in water no leaks are observed.

## Claims

1. A cable sealing kit for use with a cable (1) having two or more cores (2,3,4), comprising
   (a) a shaped article (8,11) of a polymeric gel having two or more holes (9) extending therethrough for receiving respective ones of the cable cores,
   the polymeric gel having
       (i) a cone penetration value of about 30 to about 400 ($10^{-1}$ mm), and
       (ii) an elongation of from about 25% to about 850%;
   and
       (b) an enclosure (7) for surrounding the shaped article (8,11),
   characterised in that a slit (10) extends through the gel article (8,11) from the edge of each hole (9) to the edge of the gel article (8,11) in a direction inclined towards an adjacent hole (9), thereby to receive the cable core (2,3,4) without necessitating access to a free end of the cable (1).

2. A kit according to Claim 1 wherein the gel comprises a crosslinked non-silicone polymer having an olefinic unsaturated content of less than 10 mole percent and having dispersed therein a liquid in an amount of from about 20% to about 95% by weight based on the weight of the liquid and polymer and from 0 to 0.3 volume fraction of a filler, said cross-linked polymer
   (a) if derived from a solid, relatively high molecular weight polymer, having a gel fraction of at least about 50%, or
   (b) if derived from a liquid, relatively low molecular weight polymer, having at least about 0.1 crosslinks per weight average molecule;
   said composition having a storage modulus of $(1+2.5v+14.1v^2)x$ dynes/cm$^2$ wherein x is less than $5x10^5$ at 30°C and greater than $5 \times 10^2$ at 90°C, and v is the volume fraction of the filler, with the proviso that, if the crosslinked polymer is prepared from a solid high molecular weight polymer, the storage modulus at 140°C is at least about 70% of the storage modulus at 70°C, and a dynamic viscosity of $(1+2.5v+14.1v^2)y$ poises wherein y is less than $1x10^5$ at 30°C and greater than $5x10^2$ at 90°C and v is the volume fraction of the filler, said composition exhibiting first degree blocking.

3. A kit according to Claim 2, wherein said gel is derived from a butyl liquid rubber.

4. An article comprising a cable (1) having two or more cores (2,3,4) and a cable sealing kit according to any preceding claim, wherein the shaped gel article (8,11) is positioned such that it encloses the cable cores (2,3,4) and seals the area between the cores (2,3,4) and between the cores (2,3,4) and the enclosure (7).

5. A method of sealing an area around the cores (2,3,4) of a cable (1) having two or more cores (2,3,4), the cable (1) being disposed within an enclosure (7), wherein a cable sealing kit according to any one of claims 1 to 3 is applied to the cable (1) such that the shaped gel article (8,11) encloses the cable cores (2,3,4) and such that the enclosure (7) surrounds the gel article (8,11).

**Patentansprüche**

1. Kabelabdichtset zur Verwendung mit einem Kabel (1), das zwei oder mehr Seelen (2, 3, 4) hat, wobei das Kabelabdichtset aufweist:

    (a) einen geformten Gegenstand (8, 11) aus einem polymeren Gel, der zwei oder mehr durchgehende Löcher (9) aufweist, um entsprechende der Kabelseelen aufzunehmen,
    wobei das polymere Gel
        (i) einen Konuspenetrationswert von ca. 30 bis ca. 400 ($10^{-1}$ mm) und
        (ii) eine Bruchdehnung von ca. 25 % bis ca. 850 % hat;
    und
    (b) eine Umhüllung (7), um den geformten Gegenstand (8, 11) zu umgeben,
    dadurch gekennzeichnet, daß ein Schlitz (10) durch den Gelgegenstand (8, 11) von dem Rand jedes Lochs (9) zu dem Rand des Gelgegenstands (8, 11) in einer Richtung verläuft, die zu einem angrenzenden Loch (9) geneigt ist, um dadurch die Kabelseele (2, 3, 4) aufzunehmen, ohne Zugang zu einem freien Ende des Kabels (1) zu erfordern.

2. Set nach Anspruch 1, wobei das Gel ein vernetztes nicht-Silicon-Polymer aufweist, das einen olefinen ungesättigten Gehalt von weniger als 10 mol-% hat und in dem eine Flüssigkeit in einer Menge von ca. 20 Gew.-% bis ca. 95 Gew.-%, bezogen auf das Gewicht der Flüssigkeit und des Polymers, und von 0 bis 0,3 Volumenanteilen eines Füllstoffs dispergiert sind, wobei das vernetzte Polymer,

    (a) wenn es von einem festen Polymer mit relativ hohem Molekulargewicht abgeleitet ist, einen Gelanteil von wenigstens ca. 50 % hat oder,
    (b) wenn es von einem flüssigen Polymer mit relativ niedrigem Molekulargewicht abgeleitet ist, wenigstens ca. 0,1 Vernetzungsstellen pro Molekül von mittlerem Molekulargewicht hat, wobei das mittlere Molekulargewicht gewichtsmäßig berechnet ist;
    wobei die Zusammensetzung folgendes hat: einen Speichermodul von $(1 + 2{,}5v + 14{,}1v^2)x$ Dyn/cm², wobei x bei 30 °C kleiner als 5x10⁵ und bei 90 °C größer als 5x10² ist und v der Volumenanteil des Füllstoffs ist, mit der Maßgabe, daß, wenn das vernetzte Polymer aus einem festen Polymer mit hohem Molekulargewicht hergestellt ist, der Speichermodul bei 140 °C wenigstens ca. 70 % des Speichermoduls bei 70 °C ist, und eine dynamische Viskosität von $(1 + 2{,}5v + 14{,}1v^2)y$ Poise, wobei y bei 30 °C kleiner als 1x10⁵ und bei 90 °C größer als 5x10² ist und v der Volumenanteil des Füllstoffs ist, wobei die Zusammensetzung ein Blocken ersten Grades zeigt.

3. Set nach Anspruch 2, wobei das Gel von einem Butyl-Flüssigkautschuk abgeleitet ist.

4. Gegenstand, der ein Kabel (1), das zwei oder mehr Seelen (2, 3, 4) hat, und ein Kabelabdichtset nach einem der vorhergehenden Ansprüche aufweist, wobei der geformte Gelgegenstand (8, 11) derart positioniert ist, daß er die Kabelseelen (2, 3, 4) umschließt und den Bereich zwischen den Seelen (2, 3, 4) sowie zwischen den Seelen (2, 3, 4) und der Umhüllung (7) abdichtet.

5. Verfahren zum Abdichten eines Bereichs um die Seelen (2, 3, 4) eines Kabels (1) herum, das zwei oder mehr Seelen (2, 3, 4) hat, wobei das Kabel innerhalb einer Umhüllung (7) angeordnet ist, wobei ein Kabelabdichtset (1) nach einem der Ansprüche 1 bis 3 an dem Kabel (1) derart angebracht wird, daß der geformte Gelgegenstand (8, 11) die Kabelseelen (2, 3, 4) umschließt und daß die Umhüllung (7) den Gelgegenstand (8, 11) umgibt.

**Revendications**

1. Lot d'obturation étanche pour câble à utiliser avec un câble (1) ayant deux âmes (2, 3, 4) ou plus, comportant :

    (a) un article façonné (8, 11) en gel polymérique traversé de deux trous (9) ou plus pour recevoir certaines, respectives, des âmes du câble, le gel polymérique ayant
        (i) une valeur de pénétration de cône d'environ 30 à environ 400 ($10^{-1}$ mm), et
        (ii) un allongement d'environ 25 % à environ 850 % ; et
    (b) une enveloppe (7) destinée à entourer l'article façonné (8, 11),
    caractérisé en ce qu'une fente (10) s'étend à travers l'article (8, 11) en gel depuis le bord de chaque trou (9) jusqu'au bord de l'article (8, 11) en gel dans une direction inclinée vers un trou adjacent (9), afin de recevoir l'âme (2, 3, 4) de câble sans qu'il soit nécessaire d'accéder à une extrémité libre du câble (1).

2. Lot selon la revendication 1, dans lequel le gel comprend un polymère non siliconé réticulé ayant une teneur en insaturation oléfinique de moins de 10 moles pour cent et contenant en dispersion un liquide en quantité comprise entre environ 20 % et environ 95 % en poids sur la base du poids du liquide et du polymère, et 0 à 0,3 fraction en volume d'une charge, ledit polymère réticulé

(a) s'il est dérivé d'un polymère solide, de poids moléculaire relativement élevé, ayant une fraction de gel d'au moins environ 50 %, ou

(b) s'il est dérivé d'un polymère liquide, de poids moléculaire relativement bas, ayant au moins environ 0,1 liaison de réticulation par molécule moyenne exprimée en poids ;

ladite composition ayant un module de stockage de $(1 + 2,5v + 14,1v^2)$ x dynes/cm$^2$) où x est inférieur à $5 \times 10^5$ à 30°C et supérieur à $5 \times 10^2$ à 90°C, et v est la fraction en volume de la charge, pourvu que, si le polymère réticulé est préparé à partir d'un polymère solide à haut poids moléculaire, le module de stockage à 140°C soit d'au moins environ 70 % du module de stockage à 70°C, et une viscosité dynamique de $(1 + 2,5v + 14,1v^2)y$ poises où y est inférieur à $1 \times 10^5$ à 30°C et supérieur à $5 \times 10^2$ à 90°C et v est la fraction en volume de la charge, ladite composition présentant une adhérence de contact du premier degré.

3. Lot selon la revendication 2, dans lequel ledit gel est dérivé d'un caoutchouc butyle liquide.

4. Article comportant un câble (1) ayant deux âmes (2, 3, 4) ou plus et un lot d'obturation étanche de câble selon l'une quelconque des revendications précédentes, dans lequel l'article façonné (8, 11) en gel est positionné de manière qu'il entoure les âmes (2, 3, 4) du câble et obture de façon étanche la zone entre les âmes (2, 3, 4) et entre les âmes (2, 3, 4) et l'enveloppe (7).

5. Procédé d'obturation étanche d'une zone entourant les âmes (2, 3, 4) d'un câble (1) ayant deux âmes (2, 3, 4) ou plus, le câble (1) étant disposé à l'intérieur d'une enveloppe (7), dans lequel un lot d'obturation étanche de câble selon l'une quelconque des revendications 1 à 3 est appliqué au câble (1) afin que l'article façonné (8, 11) en gel entoure les âmes (2, 3, 4) du câble et que l'enveloppe (7) entoure l'article (8, 11) en gel.

FIG_1

FIG_2

FIG_3

FIG_4

FIG_5